# EUROPEAN PATENT SPECIFICATION

(11) **EP 4 404 328 B1**
(45) Date of publication and mention of the grant of the patent: **25.03.2026**
(21) Application number: 22921028.1
(22) Date of filing: 18.01.2022
(51) Int. Cl.: H01M 10/48, H01M 50/50, H01M 10/42, H01M 50/569

(54) **BATTERY SAMPLING DEVICE, BATTERY, AND ELECTRICAL DEVICE**
BATTERIEENTNAHMEVORRICHTUNG, BATTERIE UND ELEKTRISCHE VORRICHTUNG
DISPOSITIF D'ÉCHANTILLONNAGE DE BATTERIE, BATTERIE ET DISPOSITIF ÉLECTRIQUE

(43) Date of publication of application: 24.07.2024
(73) Proprietor: Contemporary Amperex Technology (Hong Kong) Limited, Central, Central And Western District (HK)
(72) Inventor: LI, Junrong, Ningde, Fujian 352100 (CN)
(74) Representative: Gong, Jinping
(86) International application number: PCT/CN2022/072466
(87) International publication number: WO 2023/137578

(56) References cited:
- CN-A- 111 193 001
- CN-A- 111 668 404
- CN-A- 111 916 647
- CN-A- 111 916 647
- CN-U- 214 625 148
- CN-U- 214 625 148
- CN-U- 215 299 455
- JP-A- 2014 120 417

## Description

### FIELD OF TECHNOLOGY

The present application relates to the technical field of batteries and particularly relates toa battery as specified in any of claims 1-11 and an electric consumption device as specified in claim 12.

### BACKGROUND

A battery module includes a plurality of battery cells. Each of the battery cells includes an electrode terminal. The electrode terminals are connected through connecting strips, so as to electrically connect the plurality of battery cells. To improve the work efficiency of the battery module, the battery cells are in the optimal working state as far as possible. To make the battery cells in the optimal working state, it is needed to acquire working parameters (for example, voltage, temperature and so forth) of the battery cells in a working process of the battery module. Under a common circumstance, the battery module is provided with a sampling component. The sampling component is welded to the connecting strips, so that the sampling part is electrically connected to the battery cells, and thus, the working parameters of the battery cells are acquired through the sampling component. However, in a case where the sampling component is welded to the connecting pieces, there are many assembling steps for the battery module, so that the assembly difficulty of the battery module is improved and the production efficiency is reduced. CN 214 625 148 U (HEFEI GUOXUAN HIGH TECH POWER ENERGY CO LTD) of 5 November 2021 discloses a battery including multiple cells and a battery sampling device.

### SUMMARY

The claimed subject-matter is defined by the appended claims. The object of the present application is to provide a battery and an electric consumption device, and the present application aims to provide a sampling assembly featuring high reliability and simple structure.

The embodiments of the present application provide a battery in an aspect, including a battery cell and a battery sampling device, where the battery cell comprising a pole, the poles of two battery cells are butt welded; and where the battery sampling device is configured to sample the battery cell with end surfaces of the pole in welded connection with each other and includes a conductive component in contact with the pole and electrically connected to the pole; a sampling component electrically connected to the conductive component and configured to transmit or process electrical parameters acquired by the conductive component; and a bearing component configured to bear the conductive component and the sampling component and to be adapted to being inserted into a gap between two battery cells with end surfaces of the pole welded with each other, where the conductive component abuts against a side surface of the pole and the sampling component, so as to realize an electric connection among the pole, the conductive component and the sampling component.

In the technical solutions of the embodiments of the present application, the bearing component is inserted into the gap between the two battery cells with the pole end surfaces welded with each other, so that the conductive component abuts against the side surface of the pole and the sampling component. The pole, the conductive component and the sampling component are electrically connected. By arranging the sampling component, weld-free electric connection is realized by the inserted installation mode of the sampling assembly and the battery cells, which not only solves the problem that in the solution of a battery with butt welded poles, the voltage sampling space is small and welding and sampling cannot be performed or the structure is complicated and it is hard to manufactured as transfer welding and sampling are needed, but also can realize automatic installation smoothly.

In some embodiments of the present application, the conductive component includes at least one resilient contact, configured to be in contact with at least one side surface of the pole with the end surfaces welded oppositely and to be electrically connected to the side surface.

The resilient contacts are arranged, so that the conductive component has a certain deformation displacement characteristic to be further adapted to the dimension of the battery after cyclic expansion. The plurality of resilient contacts further improve the reliability of electric connection.

In some embodiments of the present application, the resilient contact includes an arc-shaped bulge protruding towards the side surface of the pole, and/or the resilient contact comprises a resilient contact piece with one end fixedly connected to the conductive component and the other end extending towards the side surface of the pole. The arc-shaped bulges and the resilient contact pieces as the resilient contacts both have the deformation displacement characteristic to be further adapted to the dimension of the battery after cyclic expansion. The arrangement mode of the resilient contacts is flexible as long as the deformation displacement characteristic of the resilient contacts is satisfied.

In some embodiments of the present application, the conductive component includes two conductive strips, and the two conductive strips include the resilient contacts and abut against the two side surfaces of the pole.

By arranging the two conductive strips electrically connected to both sides of the pole of the battery cell respectively, it can be guaranteed that the battery is not disconnected from the conductive strips due to vibration in the operating process of carrying the electric consumption device, so that the reliability of the electric connection is improved.

In some embodiments of the present application, the two conductive strips are of an integrated structure or a separated structure and are connected into the bearing component in an embedded manner. The conductive strips in the embodiment of the present application are flexible in arrangement mode as long as the conductive strips are electrically connected to the side surface of the battery cell and the sampling component respectively.

In some embodiments of the present application, the bearing component includes an insertion portion inserted into the gap between the battery cells, the insertion portion including: at least one first limiting component, configured to limit a displacement of the battery sampling device, in a direction parallel to an insertion direction of the bearing component, relative to the pole; and/or at least one second limiting component, configured to limit a displacement of the battery sampling device, in a direction perpendicular to the insertion direction of the bearing component and parallel to a direction of the end surface of the pole, relative to the pole; and/or at least one third limiting component, configured to limit a displacement of the battery sampling device, in a direction perpendicular to the insertion direction of the bearing component and perpendicular to the direction of the end surface of the pole, relative to the pole.

By arranging the first limiting component and/or the second limiting component and/or the third limiting component on the insertion portion, the bearing component is capable of limiting the battery cell in multiple directions. During match in use, the bearing component and the battery cell are limited in multiple directions, so that the installation reliability of the whole sampling assembly and the battery module is ensured, and the sampling assembly is prevented from loosening or falling off due to vibration in the process that the battery module operates with the entire vehicle.

In some embodiments of the present application, the first limiting component includes at least one first resilient support leg and at least one buckle, configured to be in contact with the two side surfaces of the pole in the insertion direction of the bearing component, respectively when the insertion portion and the pole are clamped. The first resilient support legs and the buckles are matched, so that the insertion portion and the pole are bidirectionally limited in the insertion direction, and therefore, the installation reliability in the insertion direction is guaranteed.

In some embodiments of the present application, the second limiting component includes at least one second resilient support leg, configured to be in frictional contact with the side surface of the pole of each of the battery cells when the bearing component and the pole are clamped; and/or at least one third resilient support leg, located between adjacent insertion portions and away from one side of the conductive component, where the adjacent insertion portions are in resilient contact. The second resilient support legs are adapted to enabling frictional contact between the insertion portion and the side surface of the pole of the battery cell to improve the connecting strength, so as to improve the installation reliability of the insertion portion; adjacent insertion portions contact resiliently by means of the third resilient support legs, and the adjacent insertion portions are separated through an interaction force, so that the insertion portion and the side surface of the pole of the battery cell are clamped to improve the connecting strength, so as to improve the installation reliability of the insertion portion.

In some embodiments of the present application, the third limiting component includes at least one fourth resilient support leg, configured to be in resilient contact with the side surface of the pole of the battery cell is positioned when the bearing component and the pole are clamped. The fourth resilient support legs are adapted to enabling resilient contact between the insertion portion and the side surface of the pole of the battery cell, so that the two abut against each other under the resilient action, and thus, the connecting strength is improved, and the installation reliability of the insertion portion is improved.

In some embodiments of the present application, the bearing component includes a through hole, and the conductive component penetrates through the through hole and is electrically connected to the sampling component. By forming the through hole in the bearing component, electric connection between the conductive component and the sampling component is realized.

In some embodiments of the present application, the bearing component includes a main body portion and the insertion portion, and the main body portion includes the through hole and bridges at least two batteries in welded connection to bear the sampling component. By arranging the main body portion bridging the plurality of batteries to provide the sampling component with an installation position, the sampling component is capable of being connected to at least two conductive components corresponding to welded connection positions of different batteries at the same time, so that more electrical parameters can be acquired.

In a second aspect, the present application provides an electric consumption device, including the battery in the above embodiments.

The above description is merely an overview of the technical solutions of the present application. In order to better understand the technical means of the present application, to achieve implementation according to content of the specification, and to make the above and other objects, features and advantages of the present application more obvious and easy to understand, specific implementation modes of the present application are described below.

### BRIEF DESCRIPTION OF THE DRAWINGS

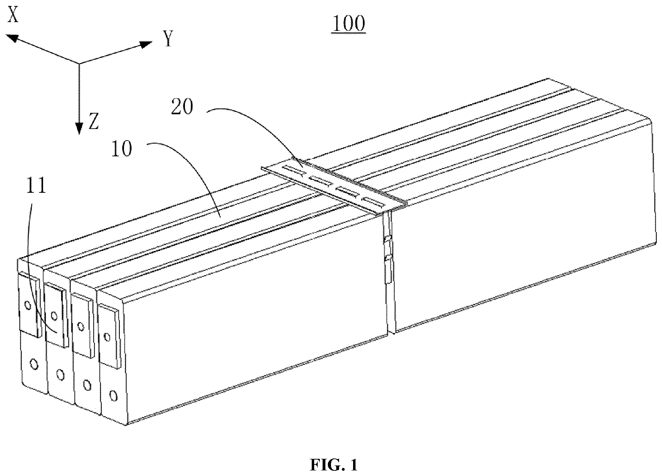

By reading detailed description of preferred implementation modes below, various other advantages and benefits will be clear to those of ordinary skill in the art. The drawings are merely used for illustrating the preferred implementation modes rather than being construed as limitation to the present application. In all the drawings, same numerals in the drawings refer to same components throughout.
In the drawings, FIG. 1 is a structural schematic diagram of a battery provided by some embodiments of the present application;
FIG. 2 is a schematic diagram of a breakdown structure of the battery provided by some embodiments of the present application;
FIG. 3 is a schematic diagram of a sectional structure of the battery provided by some embodiments of the present application in an X direction;
FIG. 4 is a structural schematic diagram of a battery sampling device provided by some embodiments of the present application;
FIG. 5 is a structural schematic diagram of a conductive component in the battery sampling device provided by some embodiments of the present application;
FIG. 6 is a structural schematic diagram of a conductive component in the battery sampling device provided by some embodiments of the present application;
FIG. 7 is a front view of a bearing component in the battery sampling device provided by some embodiments of the present application; and
FIG. 8 is a left view of the bearing component in the battery sampling device provided by some embodiments of the present application.

Numerals in the drawings in the specific implementation modes are as follows:
100-battery;
10-battery cell; 20-battery sampling device;
11-pole;
21-conductive component; 22-sampling component; 23-bearing component;
211-conductive strip; 212-arc-shaped bulge; 213-resilient contact piece;
231-main body portion; 232-insertion portion; 233-first resilient support leg; 234-buckle; 235-third resilient support leg; 236-fourth resilient support leg; 237-through hole.

### DESCRIPTION OF THE EMBODIMENTS

The following further describes the implementations of the present application in detail with reference to the drawings and embodiments. Detailed description of the following embodiments and drawings are used to illustratively state the principles of the present application, but not to limit the scope of the present application, that is, the present application is not limited to the embodiments described.

In description of the present application, it should be understood that unless otherwise specified, the implication of "a plurality of" means more than two; orientation or position relationships indicated by terms "upper", "lower", "left', "right", "inner", "outer" and the like are only to describe the present application and simplify the description rather than indicating or implying that the indicated devices or components must have specific orientations and are configured and operated in the specific orientations. Therefore, it cannot be construed as limitations to the present application. In addition, the terms "first", "second" and "third" are for descriptive purposes only and should not be construed as indicating or implying relative importance. "Perpendicular" is by no means perpendicular in the strict sense but within an allowed range of error. "Parallel" is by no means parallel in the strict sense but within an allowed range of error.

"Embodiments" mentioned in the present application mean that specific features, structures or features described in embodiments combined can be comprised in at least one embodiment of the present application. The phrase appearing at each position of the description does not necessarily indicate the same embodiment and it is not an exclusively independent or alternative embodiment of other embodiments. A person skilled in the art understands implicitly and explicitly that embodiments described in the present application can be combined with other embodiments.

In the description of the present application, it is to be further noted that unless otherwise specified and defined, the terms "mounting", "connecting" and "connection" should be understood in a broad sense, for example, "mounting", "connecting" and "connection" can be either fixed connection or detachable connection or integrated connection; can be either direct connection and can be either indirect connection via an intermediation. Those of ordinary skill in the art can understand specific meaning of the terms in the present application under specific circumstances.

As is disclosed in the background art, the battery module usually has the sampling component. Under the common circumstance, the battery cell in the battery module is connected to the sampling component through a connecting piece. Specifically, the connecting piece is welded to a positive terminal and a negative terminal of an anode, and the sampling component is welded to the connecting piece or is in compression-fitting joint to the connecting piece through a bolt attaching support, so that the sampling component and the connecting piece are eclectically connected. Meanwhile, the connecting piece is further electrically connected to the pole of the battery cell, so that the sampling component is electrically connected to the pole, and thus, information such as temperature and voltage of the battery cell is acquired through the sampling component, and is transmitted to a battery management unit. A user observes and analyzes sampled data to acquire the working state of the battery module. When the temperature or voltage of the battery module is abnormal, the user can understand timely and take corresponding measures to reduce phenomena such as fires caused by failure of the battery module, so that the safety of the battery module is improved.

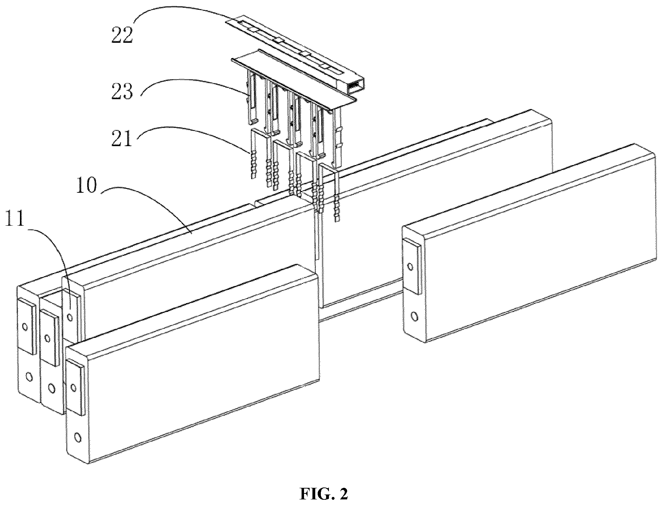

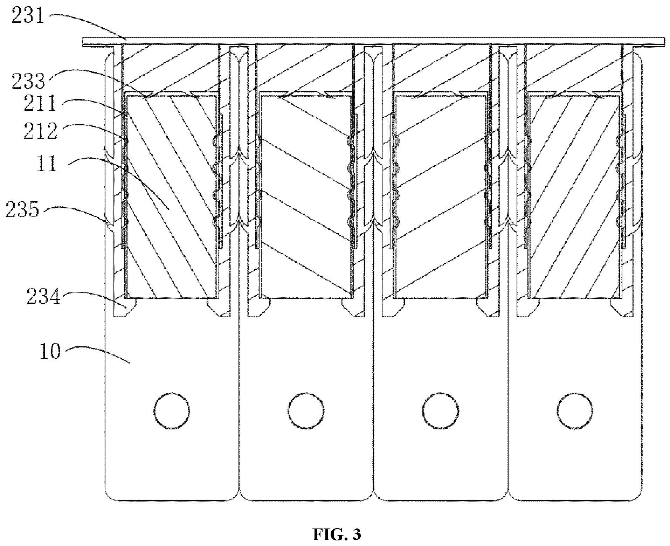

However, the above connecting mode is not suitable for the battery cell 10 with the end surfaces of the pole 11 in welded connection with each other in the present application (with reference to FIGs. 1-3). The reasons are as follows: firstly, a plurality of bolts are needed for compression-fitting joint of the bolt attaching support, so that the structure is complicated, which is harmful for yield production and automation, and there is still a risk of torque failure of the bolt; secondly, the connecting mode of compression-fitting joint of the bolt attaching support is mainly suitable for a connecting scene where the pole 11 is located on the surface of the stacked battery cells 10; and finally, when connection is performed by way of welding, although the sampling component 22 is electrically connected to the battery cell 10, a certain operating space is needed. In the present application, in the battery cell 10 with butt welded poles 11, the sampling space is small and welding and sampling cannot be performed, and there are still defects of complicated processing course and low production efficiency by way of transfer welding and sampling, which is harmful for actual production.

To solve the technical problem, as shown in FIGs. 1-4, the embodiments of the present invention provide a battery sampling device 20 configured to sample a battery cell 10 with end surfaces of a pole **11** in welded connection with each other, where the battery sampling device includes a conductive component 21, a sampling component 22 and a bearing component 23; the conductive component 21 is in contact with the pole 11 and is electrically connected to the pole **11;** the sampling component 22 is electrically connected to the conductive component 21 and is configured to transmit or process electrical parameters acquired by the conductive component 21; and the bearing component 23 is configured to bear the conductive component 21 and the sampling component 22 and to be adapted to being inserted into a gap between two battery cells 10 with end surfaces of the pole **11** welded with each other, where the conductive component 21 abuts against a side surface of the pole **11** and the sampling component 22, so as to realize an electric connection among the pole **11,** the conductive component 21 and the sampling component 22.

By arranging the bearing component 23 for mechanically connecting the battery sampling device 20 to the battery cell 10 with the end surfaces of the pole **11** welded with each other in an inserted installation mode, the battery cell 10 is connected to the battery sampling device 20 by no means of welding, which not only simplifies the connecting step of the two, but also solves the problem that in the solution of the battery 100 with butt welded poles 11, the voltage sampling space is small and welding and sampling cannot be performed or the structure is complicated and it is hard to manufactured as transfer welding and sampling are needed, but also can realize automatic installation smoothly.

The battery sampling device 20 provided by the embodiments of the present application can use the battery cell 10 as the battery 100 of a power supply and an electric consumption device, where the electric consumption device can be, but not limited to, a mobile phone, a tablet personal computer, a notebook computer, an electric toy, an electric tool, a battery car, an electric automobile, a steamer and a spacecraft. The electric toy may include a fixed or mobile electric tool, for example, a game machine, an electric automobile toy, an electric steamer toy and an electric aircraft toy, and the aircraft may include an aircraft, a rocket, a space shuttle and spacecraft. Therefore, electric consumption devices capable of using the battery cell 10 as the power supply all fall within the scope of protection of the present application.

By taking a vehicle as an example, the vehicle in the embodiments of the present application may be a new energy automobile. The new energy automobile may be either a full electric vehicle or a hybrid electric vehicle or an extended range electric vehicle and the like. The vehicle may include the battery 100 and a vehicle main body. The battery 100 is arranged on the vehicle main body. The vehicle main body is further provided with a driving motor which is electrically connected to the battery 100 and is powered by the battery 100. A driving motor is connected to wheels on the vehicle main body through a transmission mechanism, so as to drive the vehicle to travel. Specifically, the battery 100 may be horizontally arranged at the bottom of the vehicle main body.

The battery 100 includes a box body and the battery module. The box body is provided with an accommodation cavity, the battery module is accommodated in the accommodation cavity, there may be one or more battery modules, and the plurality of battery modules are arranged in the accommodation cavity. The type of the box body is not limited and may be a frame box body, a disc box body or a case box body. Specifically, the box body may include a lower box body which accommodates the battery modules and an upper box body covering the lower box body.

As shown in FIGs. 1-3, the battery module may include the battery cells 10 and the sampling component 22. Each of the battery cells 10 may include the pole 11, and each of the battery cells 10 includes a positive pole 11 and a negative pole 11. In the battery module, the battery cells 10 are electrically connected by way of serial connection and/or parallel connection specifically. Specifically, the poles **11** of each of the battery cells 10 are arranged on both sides. The poles 11 of two battery cells 10 arranged in the X direction are butt welded to form a small unit and the small units are stacked in a Y direction to form an integral battery module.

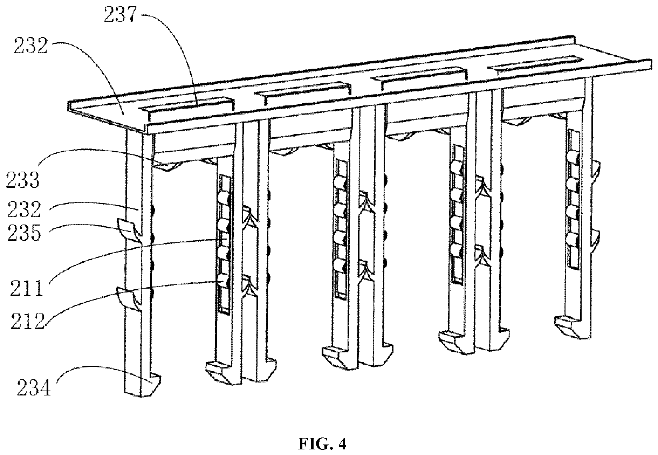

According to some embodiments of the present application, as shown in FIG. 4, the embodiments of the present invention provide a battery sampling device 20 configured to sample a battery cell 10 with end surfaces of a pole **11** in welded connection with each other, where the battery sampling device includes a conductive component 21, a sampling component 22 and a bearing component 23; the conductive component 21 is in contact with the pole 11 and is electrically connected to the pole 11; the sampling component 22 is electrically connected to the conductive component 21 and is configured to transmit or process electrical parameters acquired by the conductive component 21; and the bearing component 23 is configured to bear the conductive component 21 and the sampling component 22 and to be adapted to being inserted into a gap between two battery cells 10 with end surfaces of the pole **11** welded with each other, where the conductive component 21 abuts against a side surface of the pole **11** and the sampling component 22, so as to realize an electric connection among the pole **11,** the conductive component 21 and the sampling component 22.

The conductive component 21 is an electric connection structure and is made from materials such as phosphor copper or nickel. The conductive component 21 can be electrically connected to the pole **11** and the sampling component by way of contacting, inserting and clamping and so forth, and is configured to acquire the electrical parameters of the battery cell 10 when being electrified and to transmit the electrical parameters to the sampling component. The sampling component 22 is a signal transmitting or processing structure. Specifically, it may be either a flexible printed circuit board or a common wiring harness or a flexible cable and so forth.

The bearing component 23 is a bearing and connecting structure. On the one hand, the bearing component is adapted to being inserted into the gap between two battery cells 10 with the end surfaces of the poles **11** welded with each other to realize weld-free mechanical connection between the battery sampling device 20 and the battery cells 10 with the end surfaces of the poles **11** welded with each other. On the other hand, the bearing component bears the conductive component 21 and the sampling component. In the insertion process, the conductive component 21 and the sampling component 22 may be driven to move to connect the conductive component 21 and the end surfaces of the poles **11** of the battery cells 10 and to connect the conductive component 21 and the sampling component 22, so as to realize an electric connection among the poles **11,** the conductive component 21 and the sampling component 22.

The bearing component 23 can realize mechanical connection between the battery sampling device 20 and the battery cell 10 with the end surfaces of the pole 11 welded with each other in an inserted installation mode, so that the battery cell is connected to the battery sampling device by no means of welding, which not only simplifies the connecting step of the two, but also solves the problem that in the solution of the battery 100 with butt welded poles 11, the voltage sampling space is small and welding and sampling cannot be performed or the structure is complicated and it is hard to manufactured as transfer welding and sampling are needed, but also can realize automatic installation smoothly.

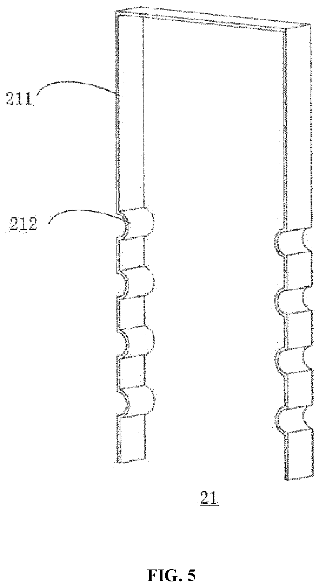

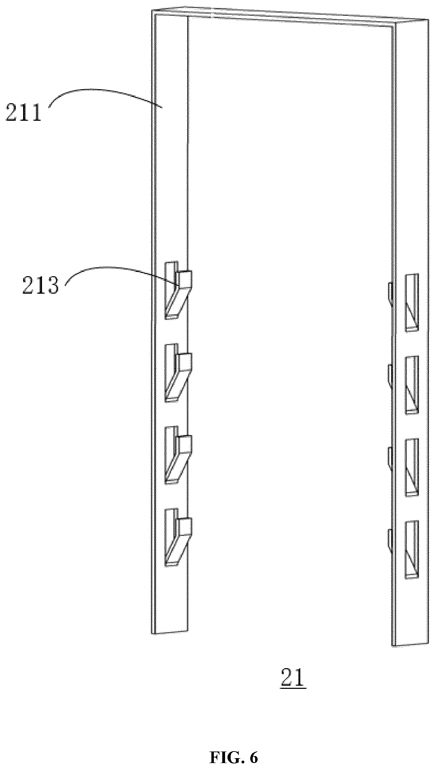

In some embodiments of the present application, optionally, as shown in FIGs. 5-6, the conductive component 21 includes at least one resilient contact, and configured to be in contact with at least one side surface of the pole 11 with the end surfaces welded oppositely and to be electrically connected to the side surface.

The resilient contacts are electric connection point locations with certain deformation displacement characteristic, and are configured to realize an electric connection between the conductive component 21 and the side surface of the pole 11. Due to the deformation displacement characteristic, the resilient contacts may adaptively deform according to the dimension of the battery 100 during connection so as to absorb the dimensional change of the battery module due to cyclic expansion. Meanwhile, when there are more than one resilient contact, the electric connection position between the conductive component 21 and the side surface of the pole 11 can be increased, so that electric disconnection caused by failure of the single resilient contact is avoided, and therefore, the reliability of the electric connection between the conductive component 21 and the side surface of the pole 11 is improved.

According to some embodiments of the present application, the resilient contact includes an arc-shaped bulge 212 protruding towards the side surface of the pole 11, and/or the resilient contact includes a resilient contact piece 213 with one end fixedly connected to the conductive component 21 and the other end extending towards the side surface of the pole 11.

Specifically, the arc-shaped bulge 212 and the resilient contact piece 213 are shown in FIGs. 5-6, respectively, the arc-shaped bulge 212 is electrically connected to the pole 11 through the protruding side surface, the resilient contact 213 is electrically connected to the pole 11 through an end extending towards the pole 11, and the two have deformation space due to their structures, i.e., the two have the deformation displacement characteristic, and can be adapted to the dimension of the battery 100 after cyclic expansion. The arrangement mode of the resilient contacts is flexible, for example, the arc-shaped bulge 212 may be independently used as the resilient contact. The resilient contact piece 213 may be independently used as the resilient contact and the arc-shaped bulge 212 and the resilient contact piece 213 may be also combined in use as the resilient contacts as long as electric connection and deformation displacement characteristic can be satisfied.

In some embodiments of the present application, optionally, the conductive component 21 includes two conductive strips 211, and the two conductive strips 211 include the resilient contacts and abut against the two side surfaces of the pole 11.

The two conductive strips 211 are arranged and the two side surfaces abut against the pole 11. Since the end surfaces of the poles 11 in the two battery cells 10 are welded with each other, the two side surfaces connected to the two conductive strips 211 are located on the opposite sides of the pole 11, i.e., the two conductive strips 211 are arranged oppositely, and the pole 11 is clamped therebetween during connection. Thus, a condition that the pole is separated from the conductive strips 211 as the battery cell 10 vibrates, so that the reliability of the electric connection between the conductive component 21 and the pole 11 is further improved.

In some embodiments of the present application, optionally, the two conductive strips 211 are of an integrated structure or a separated structure and are connected in the bearing component 23 in an embedded manner.

The integrated structure and the separated structure both can be used. As shown in FIGs. 5-6, when the two conductive strips 211 are the integrated structure, the whole conductive strips 21 are in reverse U shape. In addition, the thickness of the conductive strips 211 is not greater than 1 mm. If the conductive strips are too thick, the conductive strips 211 feature high resilience and are difficult to deform, which affects the pressurizing effect of the conductive component 21 to affect assembly, or the bearing component 23 deforms, so that the reliability cannot meet the requirement; the conductive component 21 and the bearing component 23 can be directly processed together by way of injection molding or a matching piece is reserved in the bearing component 23 and the two are combined together by way of assembly.

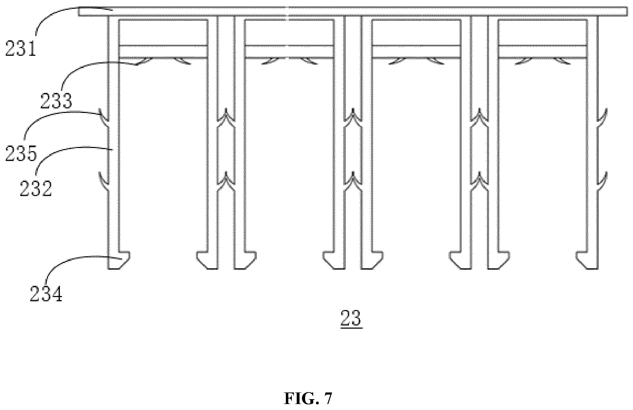

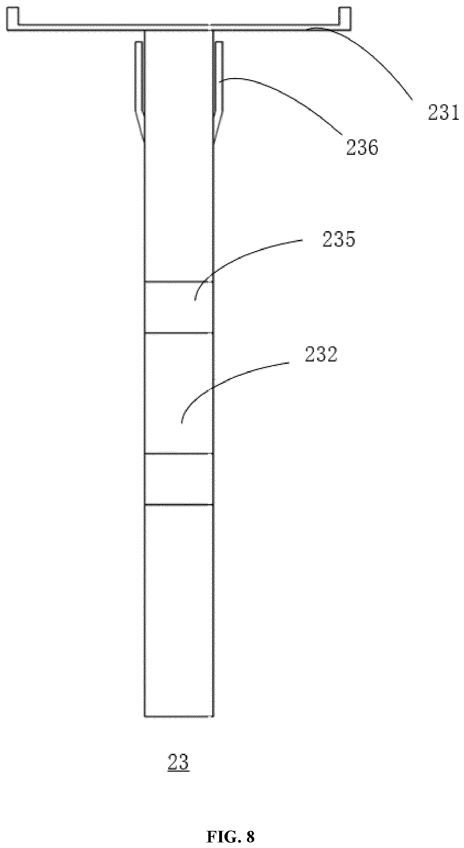

In some embodiments of the present application, as shown in FIGs. 7-8, optionally, the bearing component 23 includes an insertion portion 232 inserted into the gap between the battery cells 10, the insertion portion 232 including: at least one first limiting component and/or at least one second limiting component and/or at least one third limiting component, where the first limiting component is configured to limit a displacement of the battery sampling device 20, in a direction parallel to an insertion direction of the bearing component 23, relative to the pole 11; and/or the second limiting component is configured to limit a displacement of the battery sampling device 20, in a direction perpendicular to the insertion direction of the bearing component 23 and parallel to a direction of the end surface of the pole 11, relative to the pole 11; and the third limiting component is configured to limit a displacement of the battery sampling device 20, in a direction perpendicular to the insertion direction of the bearing component 23 and perpendicular to the direction of the end surface of the pole 11, relative to the pole 11.

When the first limiting component and/or the second first limiting component and/or the third first limiting component are in different directions, respectively, the bearing component 23 is capable of limiting the battery cell 10. During match in use, the bearing component 23 and the battery 100 are limited in multiple directions, so that the installation reliability of the whole sampling assembly and the battery module is ensured, and the sampling assembly is prevented from loosening or falling off due to vibration in the process that the battery 100 pack operates with the entire vehicle.

According to some embodiments of the application, optionally, the first limiting component includes at least one first resilient support leg 233 and at least one buckle 234, configured to be in contact with the two side surfaces of the pole 11 in the insertion direction of the bearing component 23, respectively when the insertion portion 232 and the pole 11 are clamped.

Specifically, the first resilient support leg 233 is a resilient piece structure, one end of the first resilient support leg is connected to the insertion portion 232 and the other end thereof extends obliquely towards the upper surface of the pole 11, and the first resilient support leg is adapted to being resiliently connected to the upper surface of the pole 11 when the insertion portion 232 and the pole 11 are clamped; the at least one buckle 234 is arranged on the side surface of the end of the insertion portion 232 facing the pole 11 and is adapted to being clamped with the lower surface of the pole 11 when the insertion portion 232 and the pole 11 are clamped. That is, the at least one first resilient support leg 233 and the at least one the buckle 234 are matched, so that the insertion portion 232 and the pole 11 are bidirectionally limited in the insertion direction, i.e., the Z direction, and therefore, the installation reliability in the insertion direction is guaranteed. In addition, by arranging the first resilient support leg 233, when the bearing component 23 is pressed forcibly, the bearing component is capable of generating a certain displacement, so that the bearing component 23 and the battery cell 10 are detached conveniently.

In some embodiments of the present application, optionally, the second limiting component includes at least one second resilient support leg and/or at least one third resilient support leg 235, where the second resilient support leg is configured to be in frictional contact with the side surface of the pole 11 of each of the battery cells 10 when the bearing component 23 and the pole 11 are clamped; and the third resilient support leg 235 is located between adjacent insertion portions 232 and away from one side of the conductive component 21, where the adjacent insertion portions 232 are in resilient contact.

The second resilient support leg is a frictional structure. At least one second resilient support leg is adapted to enabling frictional contact between the insertion portion 232 and the side surface of the pole 11 of the battery cell 10 to improve the installation reliability of the insertion portion 232; the third resilient support leg 235 is a resilient piece structure, one end of which inserted onto the side of the insertion portion 232 away from the conductive component 21 and the other end of which extends towards the adjacent insertion portion 232. At least one third resilient support leg 235 is adapted to enabling resilient contact of the adjacent insertion portions 232, and the adjacent insertion portions 232 are separated through an interaction force, so that the insertion portion 232 and the side surface of the pole 11 of the battery cell 10 are clamped to improve the connecting strength, so as to improve the installation reliability of the insertion portion 232. Specifically, the third resilient support legs 235 of the adjacent insertion portions 232 can be arranged oppositely to cope with abut contact and can be arranged in a staggered manner to abut against the side surfaces of the adjacent insertion portions 232.

According to some embodiments of the present application, optionally, the third limiting component includes at least one fourth resilient support leg 236, configured to be in resilient contact with the side surface of the pole 11 of the battery cell 10 when the bearing component 23 and the pole 11 are clamped.

The fourth resilient support leg 236 is a resilient piece structure, and one end of which is connected to the side surface of the insertion portion 232 and the other end of which extends to the side surface where the pole 11 in the battery cell 10 is located. The fourth resilient support leg is adapted to being in resilient contact with the side surface where the pole 11 in the battery cell 10 is located during installation, so that the connecting strength is improved, and thus, the installation reliability of the insertion portion 232 is improved.

According to some embodiments of the present application, optionally, the bearing component 23 includes a through hole 237, and the conductive component 21 penetrates through the through hole 237 and is electrically connected to the sampling component 22. By forming the through hole 237 in the bearing component 23, an electric connection between the conductive component 21 and the sampling component is realized.

Specifically, the conductive component 21 is embedded into the bearing component 23, is located on the inner surface of the bearing component 23, and is electrically connected to the pole 11 as the bearing component 23 is installed in an inserted manner. The through hole 237 is an avoidance structure, so that the conductive component 21 is exported from the bearing component 23 to be connected to the sampling component 22.

According to some embodiments of the present application, optionally, the bearing component 23 includes a main body portion 231 and the insertion portion 232, and the main body portion 231 includes the through hole 237 and bridges at least two batteries 100 in welded connection to bear the sampling component 22.

Specifically, in the length direction, the side surface of the main body is provided with insertion portions 232 arranged in pairs. Each pair of insertion portions 232 is spliced with a pair of battery cells 10 with the end surfaces of the poles 11 in welded connection with each other, so the conductive components 21 embedded into the insertion portion 232 are electrically connected to the poles 11 of a pair of battery cells 10 with the end surfaces of the poles 11 in welded connection with each other, and thus, the same battery sampling device 20 is capable of acquiring the electrical parameters of the plurality of pairs of battery cells 10. The sampling component 22 is arranged on the upper surface of the main body portion 231 in the length direction and is electrically connected to the plurality of conductive components 21 through the plurality of through holes 237 in the main body portion 231, so as to transmit or process the electrical parameters of the plurality of conductive components 21 simultaneously.

According to some embodiments of the present application, as shown in FIGs. 1-3, the present application provides a battery 100, including eight battery cells 10, where the poles 11 of two battery cells 10 are butt welded to form a small unit and the small units are stacked to form the integral battery module. Correspondingly, the bearing component 23 in the battery sampling device 20 includes eight insertion portions 232, and the eight insertion portions 232 are correspondingly arranged in pairs to be adapted to splicing with the battery cells 10 with the end surfaces of the poles 11 in welded connection with each other, so that the conductive component 21 abuts against the side surface of the pole 11 and the sampling component 22 respectively, so as to realize electric connection among the pole 11, the conductive component 21 and the sampling component 22.

Finally, it shall be noted that the above embodiments are only used to explain the technical solution of the present invention and shall not be construed as limitation. Despite reference to the aforementioned embodiments to make a detailed description for the present invention, it will be understood by those of ordinary skill in the art that they still can modify the technical solution recorded by the aforementioned embodiments or make equivalent substitutions on part of technical features therein. Such modifications or substitutions do not deviate the nature of the technical scheme from the scope of the technical solution embodied in the embodiments according to the present invention.

## Claims

1. A battery, comprising two or more battery cells (10) and a battery sampling device (20),
wherein the battery cells each comprise a pole (11), the poles (11) of two battery cells(10) being butt welded; and
wherein the battery sampling device is configured to sample each of the battery cells (10) with end surfaces of the pole (11) in welded connection with each other, comprising:
a conductive component (21) in contact with the pole (11) and electrically connected to the pole (11);
a sampling component (22) electrically connected to the conductive component (21) and configured to transmit or process electrical parameters acquired by the conductive component (21); and
a bearing component (23) configured to bear the conductive component (21) and the sampling component (22) and to be adapted to being inserted into a gap between two battery cells (10) with end surfaces of the pole (11) welded with each other, wherein the conductive component (21) abuts against a side surface of the pole (11) and the sampling component (22), so as to realize an electric connection among the pole (11), the conductive component (21) and the sampling component (22).

2. The battery according to claim 1, wherein the conductive component (21) comprises at least one resilient contact, configured to contact with at least one side surface of the pole (11) with the end surfaces welded oppositely and to be electrically connected to the side surface.

3. The battery according to claim 2, wherein the resilient contact comprises an arc-shaped bulge protruding (212) towards the side surface of the pole (11), and/or the resilient contact comprises a resilient contact piece (213) with one end fixedly connected to the conductive component (21) and the other end extending towards the side surface of the pole (11).

4. The battery according to claim 3, wherein the conductive component (21) comprises two conductive strips (211), and the two conductive strips (211) comprise the resilient contact and abut against two side surfaces of the pole (11).

5. The battery according to claim 4, wherein the two conductive strips (211) are of an integrated structure or a separated structure and are connected into the bearing component (23) in an embedded manner.

6. The battery according to claim 1, wherein the bearing component (23) comprises an insertion portion (232) inserted into the gap between the battery cells (10), the insertion portion (232) comprising:
at least one first limiting component, configured to limit a displacement of the battery sampling device, in a direction parallel to an insertion direction of the bearing component (23), relative to the pole (11); and/or
at least one second limiting component, configured to limit a displacement of the battery sampling device, in a direction perpendicular to the insertion direction of the bearing component (23) and parallel to a direction of the end surface of the pole (11), relative to the pole (11); and/or
at least one third limiting component, configured to limit a displacement of the battery sampling device, in a direction perpendicular to the insertion direction of the bearing component (23) and perpendicular to the direction of the end surface of the pole (11), relative to the pole (11).

7. The battery according to claim 6, wherein the first limiting component comprises:
at least one first resilient support leg (233) and at least one buckle, configured to be in contact with two side surfaces of the pole (11) in the insertion direction of the bearing component (23), respectively in a case where the insertion portion (232) and the pole (11) are clamped.

8. The battery according to claim 6, wherein the second limiting component comprises:
at least one second resilient support leg, configured to be in frictional contact with the side surface where the pole (11) of the battery cell (10) is positioned in a case where the bearing component (23) and the pole (11) are clamped; and/or
at least one third resilient support leg (235), located between adjacent insertion portions (232) and away from one side of the conductive component (21) such that the adjacent insertion portions (232) are in resilient contact.

9. The battery according to claim 6, wherein the third limiting component comprises:
at least one fourth resilient support leg (236), configured to be in resilient contact with the side surface where the pole (11) of the battery cell (10) is positioned in a case where the bearing component (23) and the pole (11) are clamped.

10. The battery according to any one of claims 6-9, wherein the bearing component (23) comprises a through hole (237), and the conductive component (21) penetrates through the through hole (237) and is electrically connected to the sampling component (22).

11. The battery according to claim 10, wherein the bearing component (23) comprises a main body portion (231) and the insertion portion (232), and the main body portion (231) comprises the through hole (237) and bridges at least two batteries in welded connection to bear the sampling component (22).

12. An electricity consumption device, comprising the battery according to any one of claims 1-11.

## Patentansprüche

1. Batterie, die zwei oder mehr Batteriezellen (10) und eine Batterieabtastvorrichtung (20) umfasst,
wobei die Batteriezellen je einen Pol (11) umfassen, wobei die Pole (11) von zwei Batteriezellen (10) stumpfgeschweißt sind; und
wobei die Batterieabtastvorrichtung derart ausgebildet ist, dass sie jede der Batteriezellen (10) mit Endflächen des Pols (11) in einer geschweißten Verbindung miteinander abtastet, umfassend:
eine leitfähige Komponente (21), die mit dem Pol (11) in Kontakt steht und mit dem Pol (11) elektrisch verbunden ist;
eine Abtastkomponente (22), die mit der leitfähigen Komponente (21) elektrisch verbunden und zum Übertragen oder Verarbeiten elektrischer Parameter, die durch die leitfähige Komponente (21) erfasst werden, ausgebildet ist; und
eine Tragkomponente (23), die derart ausgebildet ist, das sie die leitfähige Komponente (21) und die Abtastkomponente (22) trägt und dazu angepasst ist, in einen Spalt zwischen zwei Batteriezellen (10) mit miteinander verschweißten Endflächen des Pols (11) eingeführt zu werden, wobei die leitfähige Komponente (21) an einer Seitenfläche des Pols (11) und der Abtastkomponente (22) anliegt, um eine elektrische Verbindung zwischen dem Pol (11), der leitfähigen Komponente (21) und der Abtastkomponente (22) zu realisieren.

2. Batterie nach Anspruch 1, wobei die leitfähige Komponente (21) mindestens einen federnden Kontakt umfasst, der derart ausgebildet ist, dass er mit mindestens einer Seitenfläche des Pols (11) mit den gegenüberliegend verschweißten Endflächen in Kontakt steht und mit der Seitenfläche elektrisch verbunden ist.

3. Batterie nach Anspruch 2, wobei der federnde Kontakt eine bogenförmige Ausbuchtung (212), die zu der Seitenfläche des Pols (11) hinausragt, umfasst und/oder der federnde Kontakt ein federndes Kontaktstück (213) umfasst, dessen eines Ende fest mit der leitfähigen Komponente (21) verbunden ist und dessen anderes Ende sich zu der Seitenfläche des Pols (11) hin erstreckt.

4. Batterie nach Anspruch 3, wobei die leitfähige Komponente (21) zwei leitfähige Streifen (211) umfasst und die zwei leitfähigen Streifen (211) den federnden Kontakt umfassen und an zwei Seitenflächen des Pols (11) anliegen.

5. Batterie nach Anspruch 4, wobei die zwei leitfähigen Streifen (211) eine integrierte Struktur oder eine getrennte Struktur aufweisen und in die Tragkomponente (23) verbunden eingebettet sind.

6. Batterie nach Anspruch 1, wobei die Tragkomponente (23) einen in den Spalt zwischen den Batteriezellen (10) eingeführten Einführabschnitt (232) umfasst, wobei der Einführabschnitt (232) Folgendes umfasst:
mindestens eine erste Begrenzungskomponente, die derart ausgebildet ist, dass sie eine Verschiebung der Batterieabtastvorrichtung in einer zu einer Einführrichtung der Tragkomponente (23) parallelen Richtung relativ zu dem Pol (11) begrenzt; und/oder
mindestens eine zweite Begrenzungskomponente, die derart ausgebildet ist, dass sie eine Verschiebung der Batterieabtastvorrichtung in einer zu der Einführrichtung der Tragkomponente (23) senkrechten und zu einer Richtung der Endfläche des Pols (11) parallelen Richtung relativ zu dem Pol (11) begrenzt; und/oder
mindestens eine dritte Begrenzungskomponente, die derart ausgebildet ist, dass sie eine Verschiebung der Batterieabtastvorrichtung in einer zu der Einführrichtung der Tragkomponente (23) senkrechten und zu der Richtung der Endfläche des Pols (11) senkrechten Richtung relativ zu dem Pol (11) begrenzt.

7. Batterie nach Anspruch 6, wobei die erste Begrenzungskomponente Folgendes umfasst:
mindestens einen ersten federnden Stützfuß (233) und mindestens einen Rastvorsprung, die derart ausgebildet sind, dass sie in Kontakt mit zwei Seitenflächen des Pols (11) in der Einführrichtung der Tragkomponente (23) stehen, jeweils wenn der Einführabschnitt (232) und der Pol (11) festgeklemmt sind.

8. Batterie nach Anspruch 6, wobei die zweite Begrenzungskomponente Folgendes umfasst:
mindestens einen zweiten federnden Stützfuß, der derart ausgebildet ist, dass er in Reibungskontakt mit der Seitenfläche steht, an der der Pol (11) der Batteriezelle (10) positioniert ist, wenn die Tragkomponente (23) und der Pol (11) festgeklemmt sind; und/oder
mindestens einen dritten federnden Stützfuß (235), der sich zwischen benachbarten Einführabschnitten (232) und von einer Seite der leitfähigen Komponente (21) entfernt befindet, sodass die benachbarten Einführabschnitte (232) in federndem Kontakt stehen.

9. Batterie nach Anspruch 6, wobei die dritte Begrenzungskomponente Folgendes umfasst:
mindestens einen vierten federnden Stützfuß (236), der derart ausgebildet ist, dass er in federndem Kontakt mit der Seitenfläche steht, auf der der Pol (11) der Batteriezelle (10) positioniert ist, wenn die Tragkomponente (23) und der Pol (11) festgeklemmt sind.

10. Batterie nach einem der Ansprüche 6-9, wobei die Tragkomponente (23) ein Durchgangsloch (237) umfasst und die leitfähige Komponente (21) durch das Durchgangsloch (237) hindurchgeht und mit der Abtastkomponente (22) elektrisch verbunden ist.

11. Batterie nach Anspruch 10, wobei die Tragkomponente (23) einen Hauptkörperabschnitt (231) und den Einführabschnitt (232) umfasst und der Hauptkörperabschnitt (231) das Durchgangsloch (237) umfasst und mindestens zwei Batterien in einer geschweißten Verbindung überbrückt, um die Abtastkomponente (22) zu tragen.

12. Stromverbrauchsvorrichtung, die die Batterie nach einem der Ansprüche 1-11 umfasst.

## Revendications

1. Batterie, comprenant au moins deux éléments de batterie (10) et un dispositif d'échantillonnage de batterie (20),
dans laquelle les éléments de batterie comprennent chacun un pôle (11), les pôles (11) de deux éléments de batterie (10) étant soudés bout à bout ; et
dans laquelle le dispositif d'échantillonnage de batterie est configuré pour échantillonner chacun des éléments de batterie (10) avec des surfaces d'extrémité du pôle (11) en liaison soudée les unes avec les autres, comprenant :
un composant conducteur (21) en contact avec le pôle (11) et connecté électriquement au pôle (11) ;
un composant d'échantillonnage (22) connecté électriquement au composant conducteur (21) et configuré pour transmettre ou traiter des paramètres électriques acquis par le composant conducteur (21) ; et
un composant de support (23) configuré pour porter le composant conducteur (21) et le composant d'échantillonnage (22) et pour être conçu pour être inséré dans un espace entre deux éléments de batterie (10) avec des surfaces d'extrémité du pôle (11) soudées l'une à l'autre, dans laquelle le composant conducteur (21) vient buter contre une surface latérale du pôle (11) et du composant d'échantillonnage (22), de manière à réaliser une connexion électrique entre le pôle (11), le composant conducteur (21) et le composant d'échantillonnage (22).

2. Batterie selon la revendication 1, dans laquelle le composant conducteur (21) comprend au moins un contact élastique, configuré pour entrer en contact avec au moins une surface latérale du pôle (11) avec les surfaces d'extrémité soudées de manière opposée et pour être électriquement connecté à la surface latérale.

3. Batterie selon la revendication 2, dans laquelle le contact élastique comprend un renflement (212) en forme d'arc faisant saillie vers la surface latérale du pôle (11), et/ou le contact élastique comprend une pièce de contact élastique (213) avec une extrémité reliée de manière fixe au composant conducteur (21) et l'autre extrémité s'étendant vers la surface latérale du pôle (11).

4. Batterie selon la revendication 3, dans laquelle le composant conducteur (21) comprend deux bandes conductrices (211), et les deux bandes conductrices (211) comprennent le contact élastique et viennent buter contre deux surfaces latérales du pôle (11).

5. Batterie selon la revendication 4, dans laquelle les deux bandes conductrices (211) font partie d'une structure intégrée ou d'une structure séparée et sont connectées dans le composant de support (23) d'une manière intégrée.

6. Batterie selon la revendication 1, dans laquelle le composant de support (23) comprend une partie d'insertion (232) insérée dans l'espace entre les éléments de batterie (10), la partie d'insertion (232) comprenant :
au moins un premier composant de limitation, configuré pour limiter un déplacement du dispositif d'échantillonnage de batterie, dans une direction parallèle à une direction d'insertion du composant de support (23), par rapport au pôle (11) ; et/ou
au moins un deuxième composant de limitation, configuré pour limiter un déplacement du dispositif d'échantillonnage de batterie, dans une direction perpendiculaire à la direction d'insertion du composant de support (23) et parallèle à une direction de la surface d'extrémité du pôle (11), par rapport au pôle (11) ; et/ou
au moins un troisième composant de limitation, configuré pour limiter un déplacement du dispositif d'échantillonnage de batterie, dans une direction perpendiculaire à la direction d'insertion du composant de support (23) et perpendiculaire à la direction de la surface d'extrémité du pôle (11), par rapport au pôle (11).

7. Batterie selon la revendication 6, dans laquelle le premier composant de limitation comprend :
au moins un premier pied de support élastique (233) et au moins une boucle, configurés pour entrer en contact avec deux surfaces latérales du pôle **(11)** dans la direction d'insertion du composant de support (23), respectivement dans un cas où la partie d'insertion (232) et le pôle (11) sont serrés.

8. Batterie selon la revendication 6, dans laquelle le deuxième composant de limitation comprend :
au moins un deuxième pied de support élastique, configuré pour entrer en contact de frottement avec la surface latérale où le pôle (11) de l'élément de batterie (10) est positionné dans un cas où le composant de support (23) et le pôle (11) sont serrés ; et/ou
au moins un troisième pied de support élastique (235), situé entre des parties d'insertion adjacentes (232) et éloigné d'un côté du composant conducteur (21), de sorte que les parties d'insertion adjacentes (232) entrent en contact élastique.

9. Batterie selon la revendication 6, dans laquelle le troisième composant de limitation comprend :
au moins un quatrième pied de support élastique (236), configuré pour entrer en contact élastique avec la surface latérale où le pôle (11) de l'élément de batterie (10) est positionné dans un cas où le composant de support (23) et le pôle (11) sont serrés.

10. Batterie selon l'une quelconque des revendications 6 à 9, dans laquelle le composant de support (23) comprend un trou traversant (237), et le composant conducteur (21) pénètre à travers le trou traversant (237) et est connecté électriquement au composant d'échantillonnage (22).

11. Batterie selon la revendication 10, dans laquelle le composant de support (23) comprend une partie de corps principal (231) et la partie d'insertion (232), et la partie de corps principal (231) comprend le trou traversant (237) et ponte au moins deux batteries en connexion soudée pour supporter le composant d'échantillonnage (22).

12. Dispositif de consommation électrique, comprenant la batterie selon l'une quelconque des revendications 1 à 11.
